# EUROPEAN PATENT APPLICATION

(11) **EP 4 667 243 A1**
(43) Date of publication of application: **24.12.2025**
(21) Application number: 24183807.7
(22) Date of filing: 21.06.2024
(51) Int. Cl.: B60C 23/04, H02K 7/18

(54) **TYRE PRESSURE MONITORING APPARATUS, AND VEHICLE COMPRISING SUCH APPARATUS**

(71) Applicant: VOLVO TRUCK CORPORATION, 405 08 Göteborg (SE)
(72) Inventor: MOHAN, Narendran, 613001 THANJAVUR (IN)
(74) Representative: Lavoix

(57) **Abstract**

Apparatus for monitoring the pressure of at least one tyre of a wheel (10) of a vehicle, the apparatus comprising:
- a pressure sensor (1);
- a rechargeable battery (2) suitable for supplying power to the pressure sensor (1);
- a permanent magnet (3) which is suitable for being fixedly attached to and to rotate substantially solidly with the wheel (10);
- a toothed wheel (4) which is suitable to be fitted around a ball bearing (5) circumferentially laid along an outer surface of the hub (11) of the wheel (10) thereby allowing the wheel (10) rotating relative to the toothed wheel (4), wherein when the wheel (10) rotates either in forward or backward direction, a magnetic field generated by means of the permanent magnet (3) induces a charging current for the rechargeable battery (2).

## Description

### TECHNICAL FIELD

The disclosure relates generally to the field of vehicle monitoring and safety. In particular aspects, the disclosure relates to an apparatus for monitoring the pressure of a tyre of a vehicle, and to a vehicle comprising such apparatus. The disclosure can be applied to heavy-duty vehicles, such as trucks, buses, and construction equipment, among other vehicle types. Although the disclosure may be described with respect to a particular vehicle, the disclosure is not restricted to any particular vehicle and can be applied in general to any type of vehicles using pneumatics.

### BACKGROUND

Currently, tyre pressure monitoring systems generally use non-replaceable batteries which have a limited operational life, e.g. up to a few years, and then need to be removed and in case replaced. This eventually results in waste products that require a proper after-use treatment.

### SUMMARY

According to a first aspect of the disclosure, there is provided an apparatus for monitoring the pressure of at least one tyre of a wheel of a vehicle, the apparatus comprising:
- a pressure sensor;
- a rechargeable battery suitable for supplying power to the pressure sensor;
- a permanent magnet which is suitable to be fixedly attached to and to rotate substantially solidly with the wheel;
- a toothed wheel which is suitable to be fitted around a ball bearing which is circumferentially laid along an outer surface of the hub of the wheel thereby allowing the wheel rotating relative to the toothed wheel, wherein when the wheel rotates either in forward or backward direction, a magnetic field generated by means of the permanent magnet induces a charging current for the rechargeable battery. The first aspect of the disclosure may seek to at least reduce the need of maintenance interventions for replacing the battery. A technical benefit may include extending the operational life of the battery, thus reducing waste and maintenance costs.

Optionally in some examples, including in at least one preferred example, the apparatus further comprises a dead weight which keeps the toothed wheel in a substantially still position while the wheel 10 is rotating. A technical benefit may include realizing a structurally stable and functionally reliable apparatus.

Optionally in some examples, including in at least one preferred example, the pressure sensor, the rechargeable battery and the permanent magnet are enclosed in a common housing suitable for being fixedly attached to the wheel. A technical benefit may include realizing a compact structure which may be installed or removed in case of need as a stand-alone device.

Optionally in some examples, including in at least one preferred example, the common housing is suitable to be fixedly attached to the air inlet valve of the pneumatic of the wheel. A technical benefit may include allowing an easier installation of the common housing with the components accommodated therein.

Optionally in some examples, including in at least one preferred example, the charging circuit feeding the rechargeable battery is cut in/cut out based on the charging status of the rechargeable battery itself. A technical benefit may include preventing or at least mitigating any overload in the battery charge.

According to a second aspect of the disclosure, there is provided a vehicle comprising at least one apparatus according to one or more of the relevant appended claims. The second aspect of the disclosure may seek to at least reduce the need of maintenance interventions for replacing the battery of each of the wheels. A technical benefit may include extending the operational life of the battery used in each wheel, thus reducing waste and maintenance costs. Also, all other technical benefits above mentioned are applicable to the vehicle, and in particular to each of its wheels.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is a view illustrating an exemplary tyre pressure monitoring apparatus according to the disclosure installed on a wheel of a vehicle, according to an example.
FIG. 2 is a section view of the apparatus illustrated in FIG. 1;
FIG. 3 schematically illustrates, in the form of a block diagram, some components of the apparatus of FIG. 1 and FIG. 2, according to an example.

### DETAILED DESCRIPTION

The detailed description set forth below provides information and examples of the disclosed technology with sufficient detail to enable those skilled in the art to practice the disclosure.

Nowadays, onboard solutions for monitoring the pressure of tyres of vehicles make use of non-replaceable batteries. These batteries have a limited operational life that, once elapsed, require maintenance intervention for their removal or replacement, and in any case result in waste products which have to be properly disposed of.

The present disclosure provides an apparatus that may have an extended operation life, in particular as regard to the battery used. The apparatus according to the present disclosure may allow monitoring the pressure of vehicle tyres in an efficient and effective way, according to a quite simple configuration that may be easily installed.

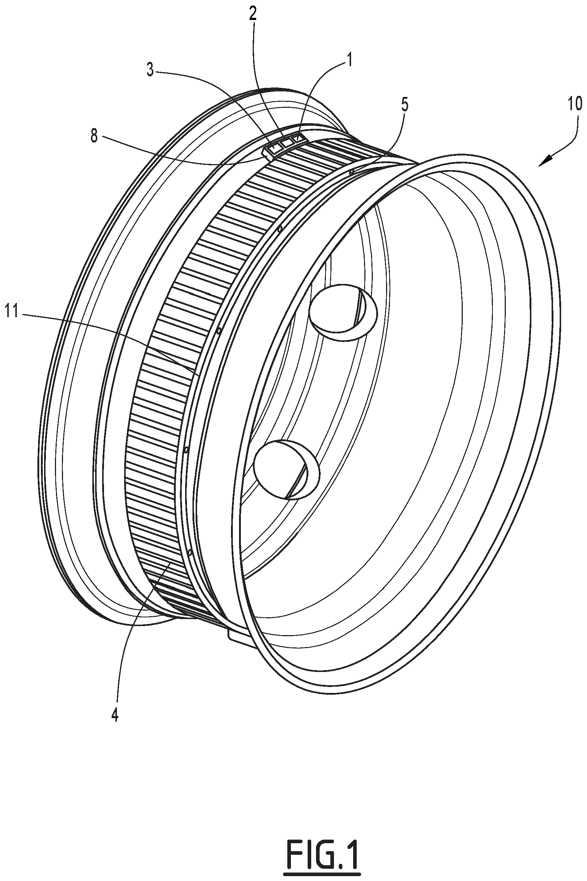

FIG. 1 is an exemplary apparatus for monitoring the pressure of at least one tyre of a wheel of a vehicle.

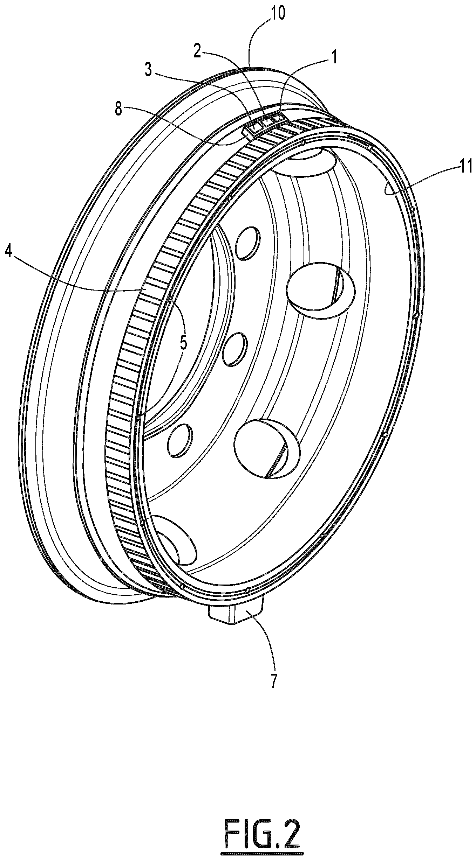

FIG.2 shows the exemplary apparatus of FIG. 1 in a section view.

In FIG. 1 and FIG. 2 the tyre or pneumatic, whose pression has to be monitored, is not illustrated for the sake of better illustration of the components of the apparatus according to the present disclosure.

According to solutions well known or readily available to those skilled in the art, the tyre is fitted over the wheel indicated in FIG. 1 and FIG. 2 by the reference number 10.

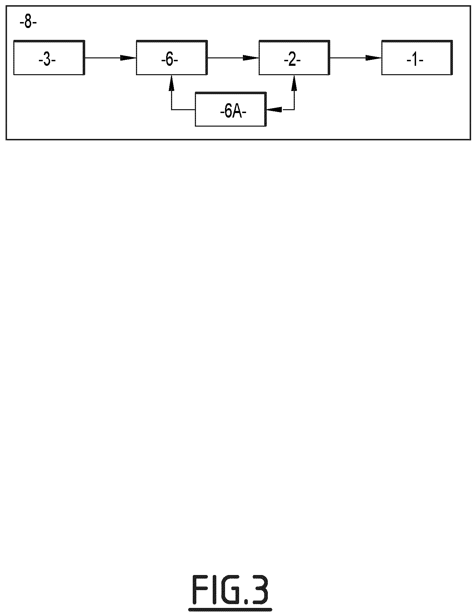

FIG.3 shows some components of the exemplary apparatus of FIG. 1 and FIG. 2 in the form of a block diagram.

In some possible aspects, and as illustrated in the example depicted in the attached figures, the apparatus for monitoring the pressure of at least one tyre of the wheel 10 of a vehicle comprises:
- a pressure sensor, schematically indicated in FIG. 1 and FIG. 3 by the reference number 1, which is suitable to be installed on the wheel 10;
- a rechargeable battery, schematically indicated in FIG. 1 and 3 by the reference number 2, which is suitable to be installed on the wheel 10 and is configured to supply power to the pressure sensor 1;
- a permanent magnet, schematically indicated in FIG. 1 and 3 by the reference number 3, which is suitable to be fixedly attached to and to rotate substantially solidly with the wheel 10;
- a toothed wheel, schematically indicated in FIG. 1 and 2 by the reference number 4 which is suitable to be fitted around a ball bearing schematically indicated in FIG. 1 and 2 by the reference number 5.

The ball bearing 5 is circumferentially laid along an outer surface of the hub 11 of the wheel 10 thereby allowing the wheel 10 rotating relative to the toothed wheel 4.

Once the apparatus is installed on the wheel 10 of a vehicle, when the wheel 10 rotates, either in a forward or a backward direction, a magnetic field generated by means of the permanent magnet 3 is cut thereby inducing a charging current for the rechargeable battery 2, i.e. charging of the battery is enabled.

The charging current is induced in a charging circuit operatively associated to the rechargeable battery 2 and schematically illustrated in FIG. 3 by the reference number 6.

The charging circuit 6 can be realized in any suitable way, according to solutions well known or readily available to those skilled in the art, and thus not described herein in further details.

For example, the charging circuit 6 may comprise a coil which is suitable to conduct a current induced by the magnetic field generated by the permanent magnet 3 in cooperation with the toothed wheel 4 while the permanent magnet rotates together with the wheel 10 relative to the toothed wheel 4.

The toothed wheel 4 can be made of any suitable material, e.g. steel. Further, its size and shape can be conveniently tailored according to the rim of the specific wheel.

In some possible aspects, the apparatus according to the present disclosure further comprises a dead weight, schematically indicated in FIG. 1 and FIG. 2 by the reference number 7, which is configured to make the toothed wheel 4 stay in position while the wheel 10 is rotating.

In practice, the dead weight 7 contributes to keep the toothed wheel 4 in a substantially still position while the wheel 10 is rotating.

In some possible aspects, the pressure sensor 1, the rechargeable battery 2 and the permanent magnet 3 are enclosed in a common housing, indicated in the attached figures by the reference number 8, which is configured to be fixedly attached to the wheel 10.

In some possible aspects, the common housing 8 is configured to be fixedly attached to the air inlet valve of the pneumatic of the wheel 10.

The housing 8 can be made of any suitable material, for example plastic.

In some possible aspects, the charging circuit 6 feeding the rechargeable battery 2 is temporarily enabled/disabled based on the charging status of the rechargeable battery 2.

In particular, in order to avoid any overload, the charging circuit 6 is temporarily disabled when the state of charge of the battery 2 has reached a predetermined upper charge threshold.

Conversely, when the state of charge of the battery 2 has reached a predetermined lower charge threshold, the charging circuit 6 is temporarily enabled to allow recharging the battery 2.

In some possible aspects, the charging status of the rechargeable battery 2 can be monitored via a control circuit, schematically represented in figure 3 by the dotted box 6A, that, based on the level of charging detected, can cause the charging circuit 6 to be temporarily enabled or disabled.

The control circuit 6A can be realized in any suitable way, according to solutions well known or readily available to those skilled in the art, and thus not described herein in further details.

Conveniently, the apparatus according to the disclosure can be installed either for retrofitting vehicles already on the market and on new ones, and an apparatus can be easily and effectively installed on each of the wheels.

Hence, the present disclosure provides an apparatus for monitoring the pressure of at least one tyre of a wheel 10 of a vehicle, according to at least the following examples.

Example 1: An apparatus for monitoring the pressure of at least one tyre of a wheel 10 of a vehicle, the apparatus comprising:
- a pressure sensor 1;
- a rechargeable battery 2 suitable for supplying power to the pressure sensor 1;
- a permanent magnet 3 which is suitable to be fixedly attached to and to rotate substantially solidly with the wheel 10;
- a toothed wheel 4 which is suitable to be fitted around a ball bearing 5 circumferentially laid along an outer surface of the hub 11 of the wheel 10 thereby allowing the wheel 10 rotating relative to the toothed wheel 4, wherein when the wheel 10 rotates either in forward or backward direction, a magnetic field generated by means of the permanent magnet 3 induces a charging current for the rechargeable battery 2.

Example 2: The apparatus of example 1, wherein it further comprises a dead weight 7 which keeps the toothed wheel 4 in a substantially still position while the wheel 10 is rotating.

Example 3: The apparatus of any of examples 1 or 2, wherein the pressure sensor 1, the rechargeable battery 2 and the permanent magnet 3 are enclosed in a common housing 8 suitable for being fixedly attached to the wheel 10.

The apparatus of example 4, wherein the common housing 8 is suitable to be fixedly attached to the air inlet valve of the pneumatic of the wheel 10.

Example 5: The apparatus of example 1, wherein the charging circuit 6 feeding the rechargeable battery 2 is temporarily enabled/disabled based on the charging status of the rechargeable battery 2 itself to remove any overload in the battery charge.

Example 6: A vehicle comprising at least one apparatus according to one or more of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

For example, when the term "adapted" or "arranged" or "configured" or any similar/equivalent term may be used herein while referring to any component as a whole, or to any part of a component, or to a combination of components, it has to be understood that it may mean and encompass correspondingly either the structure, and/or configuration and/or form and/or positioning of the related component or part thereof, or combinations, such term refers to.

In particular, for electronics, circuitry and/or software means, each of the above listed terms may means and encompass circuitry or parts thereof, as well as stored, embedded or running software codes and/or routines, algorithms, or complete programs, suitably designed for achieving the technical result and/or the functional performances for which such means are devised for.

In addition, when the terms about, or substantial or substantially, may be used for example with reference to parts, e.g. two parts moving substantially solidly to each other or one movable relative to the other(s), it has to be understood that they move together apart from unavoidable mechanical inertia.

It is to be understood that the present disclosure is not limited to the aspects described above and illustrated in the drawing; rather, the skilled person will recognize that many changes and modifications may be made within the scope of the present disclosure and appended claims. In the drawing and description, there have been disclosed aspects for purposes of illustration only and not for purposes of limitation, the scope of the disclosure being set forth in the following claims. It should also be noted that in order to clearly and concisely describe the present disclosure, the drawings may not necessarily be to scale and certain features of the disclosure may be shown in somewhat schematic form.

## Claims

1. An apparatus for monitoring the pressure of at least one tyre of a wheel (10) of a vehicle, the apparatus comprising:
- a pressure sensor (1);
- a rechargeable battery (2) suitable for supplying power to the pressure sensor (1);
- a permanent magnet (3) which is suitable for being fixedly attached to and to rotate substantially solidly with the wheel (10);
- a toothed wheel (4) which is suitable to be fitted around a ball bearing (5) circumferentially laid along an outer surface of the hub (11) of the wheel (10) thereby allowing the wheel (10) rotating relative to the toothed wheel (4), wherein when the wheel (10) rotates either in forward or backward direction, a magnetic field generated by means of the permanent magnet (3) induces a charging current for the rechargeable battery (2).

2. The apparatus according to claim 1, wherein it further comprises a dead weight (7) which keeps the toothed wheel (4) in a substantially still position while the wheel (10) is rotating.

3. The apparatus according to claim 1 or 2, wherein the pressure sensor (1), the rechargeable battery (2) and the permanent magnet (3) are enclosed in a common housing (8) suitable for being fixedly attached to the wheel (10).

4. The apparatus according to claim 3, wherein said common housing (8) is suitable to be fixedly attached to the air inlet valve of the pneumatic of the wheel (10).

5. The apparatus according to any of the preceding claims, wherein a charging circuit (6) feeding the rechargeable battery (2) is enabled or disabled based on the charging status of the rechargeable battery itself to remove any overload in the battery charge.

6. A vehicle comprising at least one apparatus according to one or more of the preceding claims.

## Amended claims

### Amended claims in accordance with Rule 137(2) EPC.

1. An apparatus for monitoring the pressure of at least one tyre of a wheel (10) of a vehicle, the apparatus comprising:
- a pressure sensor (1);
- a rechargeable battery (2) suitable for supplying power to the pressure sensor (1);
**characterized in that** it further comprises:
- a permanent magnet (3) which is suitable for being fixedly attached to and to rotate substantially solidly with the wheel (10);
- a toothed wheel (4) which is suitable to be fitted around a ball bearing (5) circumferentially laid along an outer surface of the hub (11) of the wheel (10) thereby allowing the wheel (10) rotating relative to the toothed wheel (4), wherein when the wheel (10) rotates either in forward or backward direction, a magnetic field generated by means of the permanent magnet (3) induces a charging current for the rechargeable battery (2).

2. The apparatus according to claim 1, wherein it further comprises a dead weight (7) which keeps the toothed wheel (4) in a substantially still position while the wheel (10) is rotating.

3. The apparatus according to claim 1 or 2, wherein the pressure sensor (1), the rechargeable battery (2) and the permanent magnet (3) are enclosed in a common housing (8) suitable for being fixedly attached to the wheel (10).

4. The apparatus according to claim 3, wherein said common housing (8) is suitable to be fixedly attached to the air inlet valve of the pneumatic of the wheel (10).

5. The apparatus according to any of the preceding claims, wherein a charging circuit (6) feeding the rechargeable battery (2) is enabled or disabled based on the charging status of the rechargeable battery itself to remove any overload in the battery charge.

6. A vehicle comprising at least one apparatus according to one or more of the preceding claims.
